# EUROPÄISCHE PATENTSCHRIFT

(11) **EP 1 064 465 B1**
(45) Veröffentlichungstag und Bekanntmachung des Hinweises auf die Patenterteilung: **31.07.2002**
(21) Anmeldenummer: 99911583.5
(22) Anmeldetag: 06.02.1999
(51) Int. Cl.: F16B 5/06

(54) **VORRICHTUNG ZUR BEFESTIGUNG VON ELEMENTEN AN EINEM AUS DRÄHTEN BESTEHENDEN GITTER**
DEVICE FOR SECURING ELEMENTS TO A WIRE GRID
DISPOSITIF DE FIXATION D'ELEMENTS SUR UNE GRILLE FORMEE DE FILS METALLIQUES

(30) Priorität: 27.03.1998 DE 19813568
(43) Veröffentlichungstag der Anmeldung: 03.01.2001
(73) Patentinhaber: ROBERT BOSCH GMBH, 70442 Stuttgart (DE)
(72) Erfinder: BUENNING, Torsten, D-70669 Stuttgart (DE); KOBAN, Johannes, D-70178 Stuttgart (DE); KOECK, Michael, D-73563 Mögglingen (DE); BREITENBUECHER, Armin, D-73655 Pluederhausen (DE)
(86) Internationale Anmeldenummer: DE9900315
(87) Internationale Veröffentlichungsnummer: WO9950564

(56) Entgegenhaltungen:
- DE-U- 29 711 673
- FR-A- 2 538 868
- GB-A- 2 231 432
- US-A- 3 765 634
- US-A- 5 492 295

## Beschreibung

### Stand der Technik

Die Erfindung geht aus von einer Vorrichtung zur Befestigung von Elementen an einem aus Drähten bestehenden Gitter nach der Gattung des Hauptanspruchs (DE 8 203 940 U). Zur Befestigung von Elementen, wie zum Beispiel Schildern, Informationstafeln, Handgriffen oder dergleichen an einem aus Drähten bestehenden Gitter werden üblicherweise Bindedrähte, einhängbare bzw. umschlagbare Blechstreifen oder vernietbare Blechelemente verwendet. Diese Teile haben den Nachteil, daß sie auf die jeweilige Anwendung zugeschnitten sind und teilweise aufwendig zu montieren sind.

### Vorteile der Erfindung

Die erfindungsgemäße Vorrichtung zur Befestigung von Elementen an einem aus Drähten bestehenden Gitter mit den kennzeichnenden Merkmalen des Hauptanspruchs hat demgegenüber den Vorteil, daß sie einfach zu montieren ist. Besonders vorteilhaft ist es, mindestens eines der Elemente mit Vorsprüngen zu versehen, die das Gitter formschlüssig umgreifen, da dadurch die Vorrichtung in ihrer Position justiert ist. Insbesondere ist es hierbei vorteilhaft, die Vorrichtung so mit Vorsprüngen zu versehen, daß die Vorrichtung an unterschiedlichen Gittern befestigbar ist.

### Zeichnung

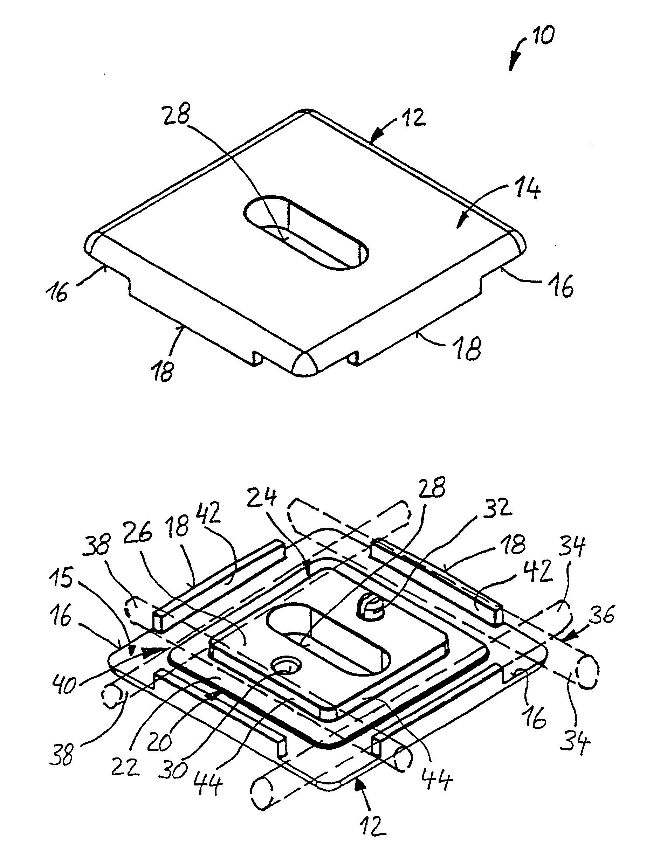

Ein Ausführungsbeispiel der Erfindung ist in der Zeichnung dargestellt und in der nachfolgenden Beschreibung näher erläutert. Die einzige Figur zeigt eine Vorrichtung und zwei symbolisch dargestellte unterschiedliche Gitter in einer perspektivischen Explosionsdarstellung.

### Beschreibung

In der Figur ist eine Vorrichtung 10 dargestellt, die aus zwei im wesentlichen flachen, miteinander verbindbaren Elementen 12 besteht, die eine quadratische Grundfläche aufweisen. Die eine Seite der Elemente 12, die in der Figur mit 14 bezeichnet ist, ist eben ausgebildet und weist abgerundete Kanten auf. Auf der anderen Seite, im folgenden Montageseite 15 genannt, sind entlang der Seitenränder 16 Vorsprünge in Form von Stegen 18 ausgebildet, die die Eckbereiche der Seitenränder 16 offenlassen. Mittig zur Montageseite 15 ist eine quadratische Erhöhung 20 angeformt, die eine kleinere Grundfläche 22 als die der Montageseite 15 hat. Auf der ersten Erhöhung 20 ist eine zweite Erhöhung 24 angeformt, die eine kleinere Grundfläche 26 hat als die Grundfläche 22 der ersten Erhöhung 20. Die Kantenlänge der Erhöhung 24 entspricht vorteilhafterweise der Länge der Stege 18. In der Mitte der Elemente 12 sind Ausnehmungen zum Hindurchführen von nicht dargestellten Befestigungsmitteln ausgebildet, die die Form eines Langlochs 28 haben. Neben der einen langen Seite eines Langlochs 28 ist in der zweiten Erhöhung 24 eine Ausnehmung in Form einer Bohrung 30 ausgebildet. Neben der anderen Seite des Langlochs 28 ist auf der zweiten Erhöhung 24 ein geschlitzter Zapfen 32 ausgebildet. Die Bohrung 30 und der Zapfen 32 sind so ausgebildet, daß sich bei zusammengefügten Elementen 12 ein Preßsitz ergibt.

In der Figur sind im rechten Bereich eines Elements 12 zwei erste Drähte 34 einer Masche eines ersten Gitters 36 und im linken Bereich des Elements zwei zweite Drähte 38 einer Masche eines zweiten Gitters 40 symbolisch angedeutet. Die Drähte 34, 38 können als gerade Stäbe ausgebildet sein oder in Wellenform, so wie es von Wellengittern bekannt ist. Die Drähte 34 sind dicker als die Drähte 38 ausgebildet und sind so angeordnet, daß sich eine größere Maschenweite ergibt als bei den Drähten 38. Die einander gegenüberliegenden Seitenflächen 42 der Stege 18 sind so beabstandet, daß sie an den Drähten 38 des Gitters 36 anliegen. Die Höhe der Stege 18 ist so bemessen, daß die neben ihnen liegenden Bereiche der Montageseite 15 bei zusammengefügten Elementen 12 ebenfalls an den Drähten 34 des Gitters 16 anliegen. Die Höhe der Seitenflächen 44 der zweiten Erhöhung 24 ist so bemessen, daß bei an einem Gitter montierten Elementen 12 die Drähte 38 des zweiten Gitters 40 an den Seitenflächen 44 der zweiten Erhöhung 24 sowie an der um die Seitenflächen 44 umlaufenden Grundfläche 22 der ersten Erhöhung 20 anliegen. Durch diese vorteilhafte Ausgestaltung der Stege 18 und der Erhöhungen 20, 24 kann sowohl das Gitter 36 als auch das Gitter 40 von der Vorrichtung 10 formschlüssig umgriffen werden, wodurch die Vorrichtung 10 an verschiedenen Gittern 36, 40 fixierbar ist. Weiterhin sind sowohl die Höhe der Stege 18 als auch die Höhen der Erhöhungen 20, 24 so dimensioniert, daß sie sich zunächst nicht berühren, wenn die Elemente 12 an einem Gitter 36, 40 montiert sind; d. h. sie sind niedriger als die halbe Dicke eines Gitters 36 bzw. 40.

Zur Montage der Vorrichtung 10 wird zunächst ein erstes Element 12 an ein Gitter 36, 40 gehalten, so daß es eine Masche des Gitters 36, 40 formschlüssig umgreift. Dann wird ein weiteres Element 12 von der anderen Seite an das Gitter 36, 40 geführt. Schließlich werden die beiden Elemente 12 zusammengedrückt. Durch die Ausbildung der sich gegenüberliegenden Bohrungen 30 und Zapfen 32 können die beiden Elemente 12 zum Einklemmen von Drähten (34, 38) des Gitters (36, 40) durch leichten Fingerdruck zusammengepreßt werden. Schließlich kann ein weiteres nicht dargestelltes Element, beispielsweise ein Schild, eine Informationstafel oder ein Türgriff mit einer Schraube und einer Mutter an der Vorrichtung 10 und somit an dem Gitter 36 oder 40 befestigt werden. Durch die oben beschriebene Dimensionierung der Höhen der Stege 18 und der Erhöhungen 20, 24 werden die Elemente 12 erst durch das Verschrauben mit einer Schraube und einer Mutter so zusammengepreßt, daß sie sich berühren. Dadurch lassen sich herstellungsbedingte Toleranzen der Gitter 36, 40 eliminieren.

Die Vorrichtung 10 zur Befestigung von Elementen an einem aus Drähten 34, 38 bestehenden Gitter 36, 40 ist ein einfaches, kostengünstiges Bauteil aus Kunststoff, das leicht an verschiedenen Gittern 36, 40 montiert werden kann.

Verschiedene Abwandlungen der Vorrichtung 10 sind denkbar. Statt der Bohrung 30 und des Zapfens 32 können beispielsweise auch durchgehende Bohrungen vorgesehen werden, durch die Schrauben geführt werden, die über Muttern die beiden Elemente 12 zusammenhalten. Es ist auch möglich, daß die beiden Elemente 12 unterschiedlich ausgebildet sind. Zum Beispiel kann ein erstes abgewandeltes Element über Stege und Erhöhungen verfügen und ein zweites abgewandeltes Element lediglich als Platte mit beidseitig ebenen Flächen. Statt aus Kunststoff kann die Vorrichtung 10 beispielsweise auch als Metalldruckgußteil ausgebildet sein und somit höhere Kräfte übertragen. Außer einer quadratischen Grundfläche sind auch andere Grundflächen denkbar, die jeweils an die unterschiedlichen Maschenformen von Gittern angepaßt sind. Sollen höhere Kräfte übertragen werden, können auch abgewandelte Vorrichtungen eingesetzt werden, die aus mehr als zwei Elementen bestehen.

## Patentansprüche

1. Vorrichtung (10) zur Befestigung von Elementen an wenigstens einem aus Drähten (34) bestehenden ersten Gitter (36), wobei die Vorrichtung (10) mindestens zwei, im wesentlichen flache, miteinander verbindbare Elemente (12) zum Einklemmen der Drähte (34, 38) des wenigstens ersten Gitters (36) aufweist und wobei entlang der Seitenränder (16) von wenigstens einer der Seiten (15) der Elemente (12) Stege (18) ausgebildet sind, die die Eckbereiche der Seitenränder (16) offenlassen, so daß die Seitenflächen (42) der Stege (18) und die Seiten (15) der Elemente (12) zumindest teilweise an den Drähten (34) des wenigstens ersten Gitters (36) anlegbar sind, **dadurch gekennzeichnet, daß** an wenigstens einer der Seiten (15) wenigstens eines Elementes (12) eine erste Erhöhung (20) angeformt ist, die eine kleinere Grundfläche (22) hat, als die Grundfläche des wenigstens einen Elementes (12) und daß auf der ersten Erhöhung (20) eine zweite Erhöhung (24) angeformt ist, die eine kleinere Grundfläche (26) hat als die Grundfläche (22) der ersten Erhöhung (20) und daß die Seitenflächen (44) der zweiten Erhöhung (24) und die Grundfläche (22) der ersten Erhöhung (20) zumindest teilweise an Drähten (38) eines zweiten Gitters (40) anlegbar sind.

2. Vorrichtung (10) nach Anspruch 1, **dadurch gekennzeichnet, daß** mindestens eines der Elemente (12) Vorsprünge (18) aufweist, die das Gitter (36, 40) formschlüssig umgreifen.

3. Vorrichtung (10) nach Anspruch 1 oder 2, **dadurch gekennzeichnet, daß** die Elemente (12) gleich ausgebildet sind.

4. Vorrichtung (10) nach einem der Ansprüche 1 bis 3, **dadurch gekennzeichnet, daß** die Elemente (12) mindestens eine Ausnehmung (30) und wenigstens einen Vorsprung (32) aufweisen, so daß die Elemente (12) über einen Preßsitz miteinander verbindbar sind.

5. Vorrichtung (10) nach einem der Ansprüche 1 bis 4, **dadurch gekennzeichnet, daß** die Elemente (12) eine Ausnehmung (28) für Befestigungsmittel aufweisen.

6. Vorrichtung (10) nach einem der Ansprüche 1 bis 5, **dadurch gekennzeichnet, daß** die Elemente (12) aus Kunststoff oder Metall sind.

7. Vorrichtung (10) nach einem der Ansprüche 1 bis 6, **dadurch gekennzeichnet, daß** die Elemente (12) so dimensioniert sind, daß sie sich erst durch Zusammenpressen mit Befestigungsmitteln berühren.

## Claims

1. Device (10) for fastening elements on at least a first grid (36) comprising wires (34), the device (10) having at least two essentially flat elements (12) which can be connected to one another and are intended for clamping the wires (34, 38) of the at least first grid (36), and crosspieces (18) being formed along the side borders (16) of at least one of the sides (15) of the elements (12) and leaving open the corner regions of the side borders (16), with the result that the side surfaces (42) of the crosspieces (18) and the sides (15) of the elements (12) can be positioned, at least in part, against the wires (34) of the at least first grid (36), **characterized in that** a first elevation (20) is integrally formed on at least one of the sides (15) of at least one element (12), the surface area (22) of said first elevation being smaller than the surface area of the at least one element (12), and **in that** a second elevation (24) is integrally formed on the first elevation (20), the surface area (26) of said second elevation being smaller than the surface area (22) of the first elevation (20), and **in that** the side surfaces (44) of the second elevation (24) and the surface area (22) of the first elevation (20) can be positioned, at least in part, against wires (38) of a second grid (40).

2. Device (10) according to Claim 1, **characterized in that** at least one of the elements (12) has protrusions (18) which engage around the grid (36, 40) in a form-fitting manner.

3. Device (10) according to Claim 1 or 2, **characterized in that** the elements (12) are of the same design.

4. Device (10) according to one of Claims 1 to 3, **characterized in that** the elements (12) have at least one cutout (30) and at least one protrusion (32), with the result that the elements (12) can be connected to one another via a press fit.

5. Device (10) according to one of Claims 1 to 4, **characterized in that** the elements (12) have a cutout (28) for fastening means.

6. Device (10) according to one of Claims 1 to 5, **characterized in that** the elements (12) are made of plastic or metal.

7. Device (10) according to one of Claims 1 to 6, **characterized in that** the elements (12) are dimensioned such that they only come into contact with one another by being pressed together by fastening means.

## Revendications

1. Dispositif (10) pour la fixation d'éléments sur au moins une première grille (36) formée de fils (34),
ce dispositif (10) se composant d'au moins deux éléments (12) essentiellement plats, destinés à être reliés l'un à l'autre en pinçant les fils (34, 38) d'au moins la première grille (36) et
le long des bords latéraux (16) d'au moins l'un des côtés (15) des éléments (12), il y a des nervures (18) laissant dégagés les coins des bords latéraux (16) pour que les surfaces latérales (42) des nervures (18) et les faces (15) des éléments (12) s'appliquent au moins en partie contre les fils (34) d'au moins une première grille (36),
**caractérisé en ce que**
sur au moins l'une des faces (15) d'au moins un élément (12) on a formé une première surélévation (20) ayant une surface de base (22) plus petite que la surface de base d'au moins un élément (12) et sur cette première surélévation (20) on a formé une seconde surélévation (24) ayant une surface de base (26) plus petite que la surface de base (22) de la première surélévation (20) et
les surfaces latérales (44) de la seconde surélévation (24) et la surface de base (22) de la première surélévation (20) sont appliquées au moins en partie contre les fils (38) d'une seconde grille (40).

2. Dispositif (10) selon la revendication 1,
**caractérisé en ce qu'**
au moins l'un des éléments (12) comporte des parties en saillie (18) qui entourent la grille (36, 40) par une liaison par la forme.

3. Dispositif (10) selon les revendications 1 ou 2,
**caractérisé en ce que**
les éléments (12) sont identiques.

4. Dispositif (10) selon l'une des revendications 1 ou 3,
**caractérisé en ce que**
les éléments (12) comportent au moins une cavité (30) et au moins un téton (32) pour permettre de relier les éléments (12) l'un à l'autre par un siège pressé.

5. Dispositif (10) selon l'une quelconque des revendications 1 à 4,
**caractérisé en ce que**
les éléments (12) comportent une cavité (28) pour un moyen de fixation.

6. Dispositif (10) selon l'une quelconque des revendications 1 à 5,
**caractérisé en ce que**
les éléments (12) sont en matière plastique ou en métal.

7. Dispositif (10) selon l'une quelconque des revendications 1 à 6,
**caractérisé en ce que**
les éléments (12) sont dimensionnés pour qu'ils ne se touchent que lorsqu'ils sont comprimés par des moyens de fixation.
